(19) Europäisches Patentamt / European Patent Office / Office européen des brevets

(11) **EP 3 013 903 B1**

(12) **EUROPEAN PATENT SPECIFICATION**

(45) Date of publication and mention
of the grant of the patent:
**19.04.2017 Bulletin 2017/16**

(51) Int Cl.:
**C08L 33/06** (2006.01)      **C09D 133/06** (2006.01)
**C09D 163/00** (2006.01)      **C08L 63/00** (2006.01)
**C09G 1/04** (2006.01)

(21) Application number: **14767283.6**

(22) Date of filing: **12.09.2014**

(86) International application number:
**PCT/US2014/055365**

(87) International publication number:
**WO 2015/041942 (26.03.2015 Gazette 2015/12)**

(54) **AQUEOUS COATING COMPOSITION**

WÀSSRIGE BESCHICHTUNGSZUSAMMENSETZUNG

COMPOSITION AQUEUSE DE REVÊTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2013 EP 13290225**

(43) Date of publication of application:
**04.05.2016 Bulletin 2016/18**

(73) Proprietor: **Rohm and Haas Company
Midland, Michigan 48674 (US)**

(72) Inventors:
• **PERDIGON, Valerie
F-83840 Comps Sur Artuby (FR)**
• **TYSAK, Theodore
Ambler, PA 19002 (US)**

(74) Representative: **Hoggins, Mark Andrew
Patent Outsourcing Limited
1 King Street
Bakewell Derbyshire DE45 1DZ (GB)**

(56) References cited:
**EP-A2- 0 188 380       WO-A1-2008/011020
US-A1- 2006 225 612      US-A1- 2006 225 613
US-A1- 2007 179 268**

• **DATABASE WPI Week 199240 Thomson
Scientific, London, GB; AN 1992-324005
XP002732289, & CS 8 903 474 A2 (SPOLEK PRO
CHEM HUT NP) 18 March 1992 (1992-03-18)**

**Description**

This invention relates to an aqueous coating composition particularly useful as a floor finish.

Aqueous coating compositions used on floors and other surfaces have traditionally used transition metal ions, e.g., zinc, to add in crosslinking, or have incorporated silane coupling agents. For example, U.S. Pat. No. 7,812,090 discloses compositions containing a latex polymer formed by copolymerization with a silane coupling agent containing a vinyl group. However, the prior art does not address the problem of alcohol resistance in floor coatings.

The problem addressed by the present invention is to provide an aqueous coating composition which is resistant to alcohols.

STATEMENT OF INVENTION

The present invention, in its various aspects, is as set out in the accompanying claims.

The present invention provides an aqueous composition comprising: (a) an aromatic-acrylic polymer; (b) an epoxy silane; and (c) a nonionic surfactant comprising a $C_{10}$-$C_{20}$ alkyl group and two to four polymerized units of ethylene oxide; the composition is substantially free of zinc, calcium and magnesium; and pH of the composition is from 6.5 to 8.0

The present invention is further directed to a method for producing a coating composition by combining ingredients comprising: (a) an aromatic-acrylic polymer; (b) an epoxy silane; and (c) a nonionic surfactant comprising a $C_{10}$-$C_{20}$ alkyl group and two to four polymerized units of ethylene oxide; in an aqueous medium to form an aqueous composition; wherein the aqueous composition is substantially free of zinc, calcium and magnesium and has a pH from 6.5 to 8.0.

The present invention is further directed to a method for coating a substrate. The method comprises applying an aqueous composition formed by combining ingredients comprising: (a) an aromatic-acrylic polymer; (b) an epoxy silane; and (c) a nonionic surfactant comprising a $C_{10}$-$C_{20}$ alkyl group and two to four polymerized units of ethylene oxide; to a substrate; wherein the aqueous composition is substantially free of zinc, calcium and magnesium and has a pH from 6.5 to 8.0.

DETAILED DESCRIPTION

Percentages are weight percentages (wt%), temperatures are in °C and results were obtained at room temperature (20-25°C), unless specified otherwise. Weight percentages of monomers are based on the total weight of monomers in the polymerization mixture. Percentages listed with formulation ingredients are the percent solids of the aqueous emulsion or dispersion.

As used herein the term "(meth)acrylic" refers to acrylic and/or methacrylic, and "(meth)acrylate" refers to acrylate and/or methacrylate. The term "(meth)acrylamide" refers to acrylamide (AM) and/or methacrylamide (MAM). "Acrylic monomers" include acrylic acid (AA), methacrylic acid (MAA), esters of AA and MAA, itaconic acid (IA), crotonic acid (CA), acrylamide (AM), methacrylamide (MAM), and derivatives of AM and MAM, e.g., alkyl (meth)acrylamides. Esters of AA and MAA include alkyl, hydroxyalkyl, phosphoalkyl and sulfoalkyl esters, e.g., methyl methacrylate (MMA), ethyl methacrylate (EMA), butyl methacrylate (BMA), isobutyl methacrylate (iBMA), hydroxyethyl methacrylate (HEMA), hydroxyethyl acrylate (HEA), methyl acrylate (MA), ethyl acrylate (EA), butyl acrylate (BA), ethylhexyl acrylate (EHA) and phosphoethylmethacrylate (PEM). The term "vinyl monomers" refers to monomers that contain a carbon-carbon double bond that is connected to a heteroatom such as nitrogen or oxygen. Examples of vinyl monomers include vinyl acetate, vinyl formamide, vinyl acetamide, vinyl pyrrolidone, vinyl caprolactam, and long chain vinyl alkanoates such as vinyl neodecanoate, and vinyl stearate. The term "aromatic-acrylic polymers" refers to polymers of acrylic monomers and vinyl aromatic monomers or vinyl cyclohexyl monomers. Vinyl aromatic monomers have one ethylenically unsaturated group per molecule. Examples of vinyl aromatic monomers include 4-methylstyrene, 2-methylstyrene, 3-methylstyrene, 4-methoxystyrene, 2-hydroxymethylstyrene, 4-ethylstyrene, 4-ethoxystyrene, 3,4-dimethylstyrene, 2-chlorostyrene, 3-chlorostyrene, 4-chloro-3-methylstyrene, 4-t-butylstyrene, 2,4-dichlorostyrene, 2,6-dichlorostyrene, 1-vinylnapthalene, cyclohexyl methacrylate, benzyl methacrylate and benzyl acrylate. Preferred vinyl aromatic monomers include vinylpyridines, styrene (Sty) and 4-methylstyrene (vinyltoluene). The term "styrene-acrylic polymers" refers to polymers of acrylic monomers and copolymers comprising at least 50% of acrylic monomers, styrene and vinyltoluene. Preferably, styrene-acrylic polymers have at least 75% of monomer residues derived from (meth)acrylic acids, (meth)acrylates or styrene, more preferably at least 85%, and most preferably at least 95%. Preferably, any remaining monomer units are derived from vinyl monomers.

For purposes of this invention, aliphatic compounds are compounds containing no aromatic rings, i.e., they may include both straight or branched chains and non-aromatic rings. Alkyl groups are straight or branched chain hydrocarbon groups.

The aqueous composition of this invention, containing an aromatic-acrylic polymer, an epoxy silane and a nonionic surfactant comprising a $C_{10}$-$C_{20}$ alkyl group and two to four polymerized units of ethylene oxide, may contain little or no free epoxy silane, which reacts with the aromatic-acrylic polymer. The amount of free epoxy silane will decrease over time. Preferably, the aqueous composition is applied to a substrate within 24 hours of its formation, preferably within 20 hours. Preferably, the composition is applied to the substrate at least 1 hour after formation, preferably at least 2 hours, preferably at least 6 hours, preferably at least 12 hours.

The aqueous composition of this invention is substantially free of zinc, calcium and magnesium, e.g., it contains less than 0.5% total of all three metals, alternatively less than 0.2%, alternatively less than 0.1%, alternatively less than 0.05%. The composition is substantially free of transition metal ions, e.g., it contains less than 0.5%, alternatively less than 0.2%, alternatively less than 0.1%, alternatively less than 0.05%.

Crosslinkers are monomers having two or more ethylenically unsaturated groups, and may include, e.g., divinylaromatic compounds, di-, tri- and tetra-(meth)acrylate esters, di-, tri- and tetra-allyl ether or ester compounds and allyl (meth)acrylate. Preferred examples of such monomers include divinylbenzene (DVB), trimethylolpropane diallyl ether, tetraallyl pentaerythritol, triallyl pentaerythritol, diallyl pentaerythritol, diallyl phthalate, diallyl maleate, triallyl cyanurate, Bisphenol A diallyl ether, allyl sucroses, methylene bisacrylamide, trimethylolpropane triacrylate, allyl methacrylate (ALMA), ethylene glycol dimethacrylate (EGDMA), hexane-1,6-diol diacrylate (HDDA) and butylene glycol dimethacrylate (BGDMA). Especially preferred crosslinkers include DVB, ALMA, EGDMA, HDDA and BGDMA; preferably ALMA. Preferably, the amount of polymerized crosslinker units in the aromatic-acrylic polymer is at least 0.2%, preferably at least 0.4%, preferably at least 0.5%, preferably at least 0.6%, preferably at least 0.7%. Preferably, the amount of crosslinker residue in the polymer is no more than 2%, preferably no more than 1.8%, preferably no more than 1.5%, preferably no more than 1.2%, preferably no more than 1%, preferably no more than 0.9%. Preferably, the molecular weight of the crosslinker is from 180 to 330, alternatively from 200 to 300. Preferably, the crosslinker is diethylenically unsaturated, e.g., DVB, ALMA or di(meth)acrylate esters of diols. Preferably, the crosslinker is a diethylenically unsaturated crosslinker with molecular weight from 100 to 250, alternatively from 110 to 230, alternatively from 110 to 200, alternatively from 115 to 160.

Preferably, the polymer is not a multistage polymer. Preferably, the polymer comprises from 25 to 50 wt% polymerized units of at least one vinyl aromatic monomer. Preferably, the polymer comprises at least 28% polymerized units of at least one vinyl aromatic monomer, preferably at least 30%, preferably at least 32%; preferably, the polymer comprises no more than 45% polymerized units of at least one vinyl aromatic monomer, preferably no more than 42%, alternatively no more than 40%, preferably no more than 38%. Preferably, the vinyl aromatic monomer is styrene. Preferably, the polymer comprises from 48 to 74 wt% polymerized residues of acrylic monomers; preferably at least 54 wt%, preferably at least 56 wt%; preferably no more than 71 wt%, preferably no more than 69 wt%.

Preferably, the polymer further comprises monomer units of $C_1$-$C_8$ alkyl (meth)acrylate(s). Preferably, the $C_1$-$C_8$ alkyl (meth)acrylate(s) comprise an alkyl methacrylate and an alkyl acrylate, preferably a $C_1$-$C_2$ alkyl methacrylate (MMA or EMA) and a $C_4$-$C_8$ alkyl acrylate (e.g., BA or EHA), preferably MMA and a $C_4$-$C_8$ alkyl acrylate, preferably MMA and BA. Preferably the total amount of $C_1$-$C_8$ alkyl (meth)acrylate monomer units is from 34% to 70%. Preferably, the total amount of $C_1$-$C_8$ alkyl (meth)acrylate monomer units is at least 36%, preferably at least 38%, preferably at least 40%, preferably at least 42%, preferably at least 44%, preferably at least 46%, preferably at least 48%. Preferably, the total amount of $C_1$-$C_8$ alkyl (meth)acrylate monomer units is no greater than 68%, preferably no greater than 66%, preferably no greater than 64%, preferably no greater than 62%, preferably no greater than 60%, preferably no greater than 58%.

Preferably, the polymer contains at least 5% polymerized units of methacrylic acid, preferably at least 8%, preferably at least 10%, preferably at least 12%, preferably at least 14%; preferably, the polymer contains no more than 22% polymerized units of methacrylic acid, preferably no more than 20%, preferably no more than 18%, preferably no more than 17%.

Preferably, the epoxy silane is an aliphatic compound having one epoxy group and one silane group, preferably a saturated aliphatic compound. Preferably, the epoxy silane has from eight to sixteen carbon atoms, preferably from nine to fourteen. Preferably, the epoxy silane has formula $R^1(CH_2)_nSiR^2R^3R^4$, wherein $R^1$ is a $C_3$-$C_8$ aliphatic group containing an epoxide ring, n is an integer from one to four, and $R^2$, $R^3$ and $R^4$ independently are $C_1$-$C_4$ alkyl or $C_1$-$C_4$ alkoxy. Preferably, $R^1$ is glycidyloxy or 3,4-epoxycyclohexyl. Preferably at least two of $R^2$, $R^3$ and $R^4$ are $C_1$-$C_4$ alkoxy, preferably methoxy or ethoxy. Preferably, n is two or three. Preferably, $R^2$, $R^3$ and $R^4$ independently are methyl, ethyl, methoxy or ethoxy.

The nonionic surfactant comprises two to four polymerized units of ethylene oxide, i.e., the number average of ethylene oxide units is from two to four, preferably 2.5 to 3.5, preferably about 3. Preferably, the nonionic surfactant comprises a $C_{12}$-$C_{18}$ alkyl group, preferably a $C_{12}$-$C_{16}$ alkyl group, preferably a $C_{12}$-$C_{14}$ alkyl group. Preferably, the surfactant contains a mixture of alkyl groups in the indicated range.

Preferably, the pH of the aqueous composition is no more than 7.8, preferably no more than 7.6; preferably at least 6.8, preferably at least 7.

Preferably, the aqueous coating composition comprises from 10% to 25% of the polymer, preferably from 11% to 20%, preferably from 12% to 18%, preferably from 13% to 16%. Percentages are calculated based on the amount of polymer solids in the entire weight of the coating composition. More than one polymer according to this invention may be present, with the total amount of polymers being within the amounts specified above.

Preferably, the polymers used in this invention are prepared by copolymerizing the monomers using well known emulsion polymerization processes, and any other suitable processes known in the art, using, for example, a free-radical initiator such as peroxygen compounds or diazo compounds and, optionally, chain transfer agents. For example, the process described in US5574090, with addition of chain transfer agent, is suitable. The length of the primary polymer chains is typically such that, if any crosslinks were removed, the molecular weight ($M_w$) would be at least 40,000, preferably at least 60,000, preferably at least 80,000, preferably at least 100,000, preferably at least 200,000, preferably at least 250,000; preferably no more than 1,000,000, preferably no more than 700,000, preferably no more than 500,000, preferably no more than 300,000.

Preferably, the polymers of this invention are aromatic-acrylic polymers, more preferably styrene-acrylic polymers. Preferably, the aqueous coating composition has at least 45% water, alternatively at least 50%, alternatively at least 55%, alternatively at least 60%, alternatively at least 65%. Preferably, the aqueous composition contains no more than 10% organic solvent, alternatively no more than 8%, alternatively no more than 6%. In some embodiments, the composition contains at least 2% organic solvent, alternatively at least 4%, alternatively at least 4.5%. Preferred organic solvents include, e.g., aliphatic glycol ethers and esters; preferably methyl or ethyl mono-ethers of diethylene glycol or dipropylene glycol and 2,2,4-trimethyl-1,3-pentanediol monoisobutyrate.

An important feature of the compositions used in the method of the present invention is the percent swelling of the films formed from the compositions of the present invention.. Uncrosslinked amorphous polymers, polymers that are lightly crosslinked, or those that have not undergone a sufficient degree of inter-molecular and intra-molecular crosslinking will be highly solvated by appropriate solvents. Because of their reduced free volume, films of compositions based on the polymers of the present invention which have been sufficiently crosslinked will be swelled to a lesser extent. These less swelled polymer molecules will allow the films to swell less when contacted by alcohol and thus show less damage when in use as protective coatings. Other variables, such as polymer molecular weight, polymer composition, the composition of the solvent selected, and the affinity of the polymer and solvent for each other, will influence the percent swelling.

For compositions based on acrylic esters and styrene as the major monomers, alcohols such as isopropanol and ethanol are appropriate solvents for determining percent swelling. Other solvents may be selected as appropriate to the composition of the polymers to be tested, but because the polymer is added to the solvent from an aqueous emulsion, it is preferred that the solvent be compatible or miscible with water.

The average particle diameter of the emulsion polymer particles is typically from 40 nanometers to 1000 nanometers, preferably from 40 nanometers to 300 nanometers. Particle sizes herein were those measured by dynamic light scattering on a Brookhaven BI-90 analyzer. Latex samples were diluted to the appropriate concentration with IN KCl (aq).

The floor coating composition of the present invention optionally may include other ingredients, e.g., waxes, alkali-soluble resins, plasticizers, coalescents, wetting aids, defoamers, soluble or dispersed biocides, polyurethane dispersions, and silicates. The alkali-soluble resins of this invention are in the range of 0% to 10%, more preferably 2% to 7%, based on polymer solids. The waxes are used in a range of 2% to 10%, more preferable 2.5% to 6%, based on wax solids. Preferably, the total amount of coalescent, leveling agent and plasticizer in the aqueous composition is no more than 20 wt%, preferably no more than 15 wt%, preferably no more than 13 wt%; preferably at least 5 wt%, preferably at least 7 wt%. Coalescents and plasticizers are typically organic solvents. Preferably, the amount of water in the aqueous composition is at least 50 wt%, preferably at least 55 wt%, preferably at least 60 wt%, preferably at least 65 wt%, preferably at least 68 wt%; preferably no more than 85 wt%, preferably no more than 80 wt%, preferably no more than 78 wt%.

In the method of this invention, the aqueous composition is applied to a surface, e.g., floors, walls, counter tops, and roofs. Materials to which the composition may be applied include stone, concrete, asphalt, roofing substrates, linoleum, tile, wood, particle or fiber board, glass, leather, paper and cardboard. Preferably, the composition is applied to floors. Preferably, the composition is cured under ambient conditions without external heating, ventilation or humidity control, although these may be used as needed.

EXAMPLES

Various polymer formulations were coated on a substrate and evaluated for resistance to alcohols: isopropanol (IPA) and ethanol (EtOH). Percentages refer to volume percent of the indicated alcohol in water.

Polymers evaluated:

Polymer 1: 32.8% BA/15.9% MMA/34.7% STY/15.9% MAA./0.7% ALMA (made according to US 5,574,090 except that n-dodecyl mercaptan was used to provide an average molecular weight of about 170,000 Daltons) and a

fatty alcohol $C_{12}$ - $C_{14}$ with approximately 3 moles EO having a CAS No 68439-50-9 was added at 2 wt% and the final solids of the emulsion was adjusted to 38% and the final pH of the emulsion was 7.5.

Polymer 2: 25.2% BA/33.5% MMA/25.2% STY/16% MAA/0.7 ALMA (made according to US 5,574,090 and using sodium lauryl sulfate to provide an average Mw of about 350,000 Daltons), having a pH of 7.4 and a total solids of about 38%.

Polymer 3: 62% MMA/28% BA/10% MAA + 1.8% Zinc (pH = 8.0; T.S. = 38%) was prepared according to US 4,517,330 except that no potassium compounds were added to the composition.

Polymer 4: 25.2% BA/33.5% MMA/25.2% STY/16.1% MAA/0.76 % ALMA was prepared according to US 5,574,090 except that 2 wt% of a fatty alcohol $C_{12}$ - $C_{14}$ with approximately 3 moles EO having a CAS No 68439-50-9 was added and the emulsion solids was adjusted to 38% solids and the final pH of the emulsion was 7.8. The Mw of the emulsion was of about 400,000 Daltons and the particle size of the emulsion was about 90 nanometers.

Polymer 5: 29.5% BA/52.5% MMA/18% MAA was prepared according to US 5,5740,090 except that 2 wt % 3-mercaptoproprionic acid was used to provide a Mw of 30,000 Daltons, the emulsion having a final pH of 5, a final solids of 38% and a particle size of 110 nanometers.

Test Methods

To test the alcohol resistance and performance properties over hard surface substrates, sample compositions were prepared according to the details provided in Tables below. After completely mixed (for 30 minutes), the compositions were allowed to sit at ambient conditions overnight before the epoxy silane and polymer containing compositions were applied to vinyl substrates [12 inch (305 mm) x 12 inch (305 mm) x 1/8 inch (3.2 mm) manufactured by Forbo International SA, of Baar, Switzerland, Colovinyl U3P3E2C2 (Black) using a cotton gauze pad 12 ply 13 Thread count, 5 cm x 5 cm supplied by Laboratoires Lohmann & Rauscher SAS, of Remiremont, France. The coatings were allowed to dry for 1 hour. A subsequent coat was applied to test the performance properties of the coatings.

Gloss

Gloss measurements were taken after the films were allowed to dry for 1 hour. The method for determining the gloss is described in "Annual Book of ASTM Standards," Section 15, Volume 15.04, Test Procedure ASTM D 1455 (2000). A Gardner Byk Micro-Tri-Gloss meter, catalog number 4520, was used to record 60° and 20° gloss.

Leveling:

This test was performed on a black vinyl substrate after applying the second coat. The amount of coating applied was 2 grams in the vinyl substrate section. Immediately after the spreading was completed, an "X" was placed in the wet coating by drawing the gauze pad applicator diagonally from corner to corner of the test area. After the residue has dried, it was examined visually to determine the extent of the disappearance of the 'X". Leveling was rated on the following scale:

5: No "X" detectable
4: Faint outline of the "X" but no ridges in residue
3: Plain outline of the "X", no ridges detectable
2: Plain outline of the "X", ridges, and obvious de-wetting or ridging over entire coated area
1: Outline of "X", ridges, and obvious de-wetting or ridging over entire coated area

Black Heel Mark(BHM) and Scuff Resistance: The method for determining black heel and scuff resistance is described in Chemical Specialty Manufacturers Association Bulletin No. 9-73 using a Snell Capsule, except commercially available rubber shoe heels were used in place of the recommended 51 mm (2") rubber cubes. Black heel marks are an actual deposition of rubber onto or into the coating. A scuff mark, on the other hand, results from a physical displacement of the coating and appears as an area of reduced gloss. Scuff and black heel marks can occur simultaneously at the point where the heel impacts the substrate; i.e., upon removal of a black heel mark, a scuff may be present. Black heel marks were determined on white vinyl composition tile and scuff marks were determined on black vinyl composition tile. The degree of damage to the coating surface was rated as follows:

| Rating | Rating Scale 1 -10 | Description |
|---|---|---|
| Outstanding | 9-10 | Very few or no black heel or scuff marks on tile |

(continued)

| Rating | Rating Scale 1 -10 | Description |
|---|---|---|
| Excellent | 7-8 | Slight scattering of black heel or scuff marks on tile |
| Very Good (V. Good) | 5-6 | Slight-moderate scattering of black heel or scuff marks on tile |
| Good | 3-4 | Moderate scattering of black heel or scuff marks on tile |
| Fair | 2-3 | Moderate-heavy scattering of black heel or scuff marks on tile |
| Poor | 0-1 | Heavy scattering of black heel or scuff marks on tile |

Detergent Resistance: The detergent resistance test is performed on black vinyl composition tile coated with two coats of the test finish. The coating is allowed to dry for 16 to 20 hours before running this test. The coated tile is then scrubbed using a Gardner Scrub Machine with a hogs hair bristle brush for 50 cycles with 10 mLs of detergent solution. The detergent solution used is a 1:20 dilution of GP FORWARD™ Cleaner (Diversey Inc/Sealed Air, Sturtevant, Wis. 53177 USA) in water. At the end of this test the tile is allowed to air dry. Evaluate the tile for any discoloration or damage to the coating. The detergent resistance was rated on a scale of from 1 to 5, as follows (1 = poor, more than 20 percent of film removed; 2 = fair, 11-20 percent of film removed; 3 = good, 6-10 percent of film removed; 4 = very good, slight gloss reduction and/or less than 5 percent of the film removed; 5 = excellent, no water mark or perceptible damage to the film).

Removability

This test is performed on a black, vinyl substrate tile. The coated tile should be aged at ambient temperature for 7 days and then scrubbed with a Gardner Scrub Machine and a hogshair bristle brush for 75 cycles and then rinsed with tap water and dried with a paper towel. The stripping/removability solution used is a 1:20 dilution of Diversey's GP FORWARD™ Cleaner with an addition of 1% $NH_4OH$. Examine the tile surface and make an estimation of how much polish has been removed. The ratings are as follows:

Excellent (Exc) - 90-100 percent of the film has been removed.
Very Good (V.G.) - 70-90 percent of the film has been removed.
Good - 50-70 percent of the film has been removed.
Fair - 30-50 percent of the film has been removed.
Poor - 0-30 percent of the film has been removed.

Slip Resistance:

Coat 12 inch (305 mm) x 12 inch (305 mm) x 1/8 inch (3.2 mm) tiles with the floor polish (2 coats). Place all of the tiles on the floor and have one side of the tile set flush against a wall. Place a piece of plain, white, unmarked paper (such as printer/copier paper) on each of the tiles to be tested. One of the coated tiles should be a control polish that has had its slip resistance already determined from previous testing. Test the slip resistance of the polish by placing a foot on the paper with slight weight and pressure and determine how easily the paper moves across the surface of the tile. Compare each test polish's resistance to slip as compared to the control. Use the following rating scale:

5 = Much better slip resistance than the control.
4 = Better slip resistance than the control.
3 = Equal slip resistance to the control.
2 = Less slip resistance than the control.
1 = Much less slip resistance than the control.

Alcohol resistance test method

The floor care formulation was done following the detailed formulation provided below. After mixing (at least 30 minutes) the formulation was equilibrated at least for two days and then applied according to application method. The coating was allowed to dry one hour and a second coat was applied. Alcohol resistance was checked over one coat and over two coats. After 1 hour drying and 24 hours drying, 2 drops of alcohol were deposited over the film and assessment was done after the drops of alcohol had evaporated. Alcohols used were 70% Ethanol, 70% Isopropanol, 50% Ethanol, and 50% Isopropanol. A rating of the stain after evaporation was made using the following absolute numerical (0 - 10) scale.

10 - No stains no whiteness
9 - Slight stain
7 - Stain with whiteness
5 - Heavy whiteness
3 - Heavy whiteness and some film is removed
0 - All of the coating is removed

Experimental procedure for measuring percent swelling of films:

• Using a transfer pipette place 10 grams of latex or coating to be tested into a polymethylpentene petri dish.
• Allow sample to dry in at 55% relative humidity and 22 °C for 16 hours.
• Following the drying procedure, place the petri dish containing the coating into a 40 °C oven for 2 hours.
• After 2 hours exposure to the 40 °C oven, remove the dish and allow to cool to room temperature.
• Using a sharp knife, remove the dried film from the dish by peeling the coating from the edge.
• Place the film on a suitable hard surface, and using a ruler and knife, cut a 10 x 10 mm section of the film.
• Weigh the film on a precision balance to obtain the initial weight ($W_i$).
• Place the 10 x 10 mm piece of coating into a glass vial (40 mL) and fill the vial with alcohol solution using a transfer pipette. The level of alcohol should be the same in each vial and the 10 x 10 mm piece of coating should be totally immersed in the solvent at all times.

At 1 hour, 3 hour, 6 hour, , and 24 hour intervals ($W_t$)after placing the 10 x 10 mm piece into the solvent remove the film and determine the weight of the film. Repeat procedure for each sample to be tested.
At each time interval, record the weight of the piece of coating. Determine the percent swelling of the film at each time interval by the following equation:

$$\% \text{ Swelling} = (\text{Weight at Time Interval, } W_t - \text{ Initial Weight, } W_i ) / \text{ Initial Weight, } W_i \text{ x } 100$$

Storage Stability:

Storage stability is tested by placing tightly capped, 114 ml (4-ounce) glass jars containing 100 grams of polish in a constant-temperature oven set at 50°C and keeping them there for 30 days. Prior to placing test polishes in the oven, measure the polishes' viscosity with a Brookfield DV-E Viscometer using a #1 spindle at 60 rpm. After the test polishes have been aged for 30 days, remove from the oven and allow the samples to return to room temperature naturally. Measure the polishes' viscosity again.
The following examples are provided to illustrate some embodiments of the invention. They should not be read as limiting the scope of the invention which is more fully described in the specification and claims.
Unless otherwise indicated, percentages are by weight based on the total solids.
In order to properly evaluate the performance of an emulsion polymer intended for use in a polish vehicle, it is necessary that the polymer be formulated as a polish. The formulation of the emulsion polymers of this invention is done in the manner common and well understood to those versed in this art. The ingredients used, and their proportions and manner of addition are the same as is commonly practiced with conventional technology emulsion polymers.

Formulation 1

| Ingredient | Weight % | Function |
|---|---|---|
| Water | 44.30 | Diluent |
| Diethylene Glycol Ethyl Ether [1] | 6.20 | Coalescent |
| 2,2,4-Trimethyl-1,3-Pentanediol Monoisobutyrate [2] | 1.50 | Plasticizer |
| Kathon™ LXE (1.5%) [3] | 0.02 | Preservative |
| Polymer 1 (38%) | 49.70 | Vehicle |

(continued)

| Ingredient | Weight % | Function |
|---|---|---|
| Novacer™ 1010 (35%) [4] | 6.00 | Polyethylene wax emulsion |
| (1,2,3) Supplied by the Dow Chemical Company<br>(2) Supplied by BYK Chemie<br>final pH=7.3 | | |

Formulation 2

| Ingredient | Weight % | Function |
|---|---|---|
| Water | 34.70 | Diluent |
| Diethylene Glycol Monoethyl Ether [1] | 9.00 | Coalescent |
| 2,2,4-Trimethyl-1,3-Pentanediol Monoisobutyrate [2] | 2.50 | Coalescent |
| Kathon™ LXE (1.5%) [3] | 0.03 | Preservative |
| Polymer 2 (38%) or Polymer 4 (38%) | 55.90 | Vehicle |
| Permanol™ AP5[1] (40%) [4] | 9.40 | Polypropylene Wax Emulsion |
| (1,2) Supplied by the Dow Chemical Company<br>(3) Supplied by Rhodia<br>(4) Supplied by Altana<br>final pH=7.5 | | |

Formulation 3

| Ingredient | Weight % | Function |
|---|---|---|
| Water | 46.80 | Diluent |
| Abex® 18S[1] | 1.30 | Surfactant |
| Zonyl™ FSJ (1%) [2] | 0.90 | Wetting Agent |
| Kathon™ LXE (1.5%) [3] | 0.06 | Preservative |
| Dipropylene Glycol Methyl Ether [4] | 6.20 | Coalescent |
| Tributoxy Ethyl Phosphate [5] | 3.50 | Leveling Agent |
| Polymer 3 (38%) | 43.70 | Vehicle |
| Novacer™ 1010 (35%) [6] | 9.50 | Polyethylene Wax Emulsion |
| (1,5) Supplied by Rhodia<br>(2) Supplied by E. I. du Pont de Nemours<br>(3,4) Supplied by The Dow Chemical Company<br>(6) Supplied by Altana<br>final pH=8.2 | | |

Formulation 4

| Ingredient | Weight % | Function |
|---|---|---|
| Water | 34.70 | Diluent |
| Diethylene Glycol Monoethyl Ether [1] | 7.90 | Coalescent |
| 2,2,4-Trimethyl-1,3-Pentanediol Monoisobutyrate [2] | 2.25 | Coalescent |

(continued)

| Ingredient | Weight % | Function |
|---|---|---|
| Kathon™ LXE (1.5%) [3] | 0.03 | Preservative |
| Polymer 5 (38%) | 55.90 | Vehicle |
| Permanol™ AP5[1] (40%)[5] | 9.40 | Polypropylene Wax Emulsion |
| Ammonium Hydroxide (28%) | Add to pH 8.2 | |
| (1,2) Supplied by the Dow Chemical Company<br>(3) Supplied by Rhodia<br>(4) Supplied by Altana | | |

In general, the epoxy silane can be added directly to the formulation. In the examples of this invention, the epoxy silane as supplied was added to the formulations with stirring at the indicated weight percent provided in the examples. Alternatively, the epoxy silane can be added to the polymer emulsion preparation prior to formulation of the polish preparation.

Epoxy silanes:

ES-1 - Beta-(3,4-Epoxycyclohexyl)ethyltriethoxysilane (available from Momentive™ as CoatOsil 1770)
ES-2 - Gamma-Glycidoxypropyltriethoxysilane (available from Momentive™ as Silquest 1871)
ES-3 - 3-glycidyl-oxypropyl-trimethoxy-silane (available from Momentive™ as CoatOsil MP-200)

| | FLOOR POLISH PERFORMANCE PROPERTIES - Alcohol Resistance | | | |
|---|---|---|---|---|
| | Example 1 | Example 2 | Example 3 | Example 4 (Comparative) |
| Formulation<br>Polymer<br>Epoxy silane | Formulation 1<br>Polymer 1<br>1 wt% ES-1 | Formulation 1<br>Polymer 1<br>1 wt% ES-2 | Formulation 1<br>Polymer 1<br>1 wt% ES-3 | Formulation 1 Polymer 1<br><br>none |
| 1 hour drying<br>IPA 70%<br>EtOH 70%<br>IPA 50%<br>EtOH 50% | 9<br>9.5<br>10<br>10 | 10<br>10<br>10<br>10 | 9.5<br>9.5<br>10<br>10 | 6<br>7<br>6<br>7 |
| 24 hours drying<br>IPA 70%<br>EtOH 70%<br>IPA 50%<br>EtOH 50% | 9<br>9.5<br>10<br>10 | 10<br>10<br>10<br>10 | 9.5<br>9.5<br>10<br>10 | 6<br>7<br>6<br>7 |
| 48 hrs drying<br>IPA 70%<br>EtOH 70%<br>IPA 50%<br>EtOH 50% | 9<br>9.5<br>10<br>10 | 10<br>10<br>10<br>10 | 9.5<br>9.5<br>10<br>10 | 6<br>7<br>6<br>7 |

| | FLOOR POLISH PERFORMANCE PROPERTIES - Alcohol Resistance | | | |
|---|---|---|---|---|
| | Example 5 | Example 6 | Example 7 | Example 8 (Comparative) |
| Formulation Polymer Epoxy silane | Formulation 2 Polymer 2 1 wt% ES-1 | Formulation 2 Polymer 2 1 wt% ES-2 | Formulation 2 Polymer 2 1 wt% ES-3 | Formulation 2 Polymer 2 none |
| 1 hour drying IPA 70% EtOH 70% IPA 50% EtOH 50% | 5 5 6 7 | 9.5 9.5 9.5 9.5 | 8.5 8.5 9 9 | 4 4 4 7 |
| 24 hours drying IPA 70% EtOH 70% IPA 50% EtOH 50% | 8.5 8.5 8 7 | 10 10 10 10 | 9.5 10 10 10 | 4 4 5 7 |
| 48 hrs drying IPA 70% EtOH 70% IPA 50% EtOH 50% | 6.5 9.5 7 7 | 9.5 10 10 10 | 10 10 9.5 10 | 6 4 5 5 |

| | FLOOR POLISH PERFORMANCE PROPERTIES - Alcohol Resistance | | | |
|---|---|---|---|---|
| | Example 9 (Comparative) | Example 10 (Comparative) | Example 11 (Comparative) | Example 12 (Comparative) |
| Formulation Polymer Epoxy silane | Formulation 3 Polymer 3 none | Formulation 3 Polymer 3 1 wt% ES-1 | Formulation 3 Polymer 3 1 wt% ES-2 | Formulation 3 Polymer 3 1 wt% ES-3 |
| After 1 hour drying Isopropanol 70% Ethanol 70% Isopropanol 50% Ethanol 50% | 5 7 7 7 | 5 7 7 7 | 5 7 7 7 | 5 7 7 7 |
| After 24 hours drying Isopropanol 70% Ethanol 70% Isopropanol 50% Ethanol 50% | 5 8 8 8 | 5 8 8 8 | 5 8 8 8 | 5 8 8 8 |

| | FLOOR POLISH PERFORMANCE PROPERTIES - Alcohol Resistance | | | |
|---|---|---|---|---|
| | Example 13 | Example 14 | Example 15 | Example 16 (Comparative) |
| Formulation Polymer Epoxy silane | Formulation 2 Polymer 4 1 wt% ES-1 | Formulation 2 Polymer 4 1 wt% ES-2 | Formulation 2 Polymer 4 1 wt% ES-3 | Formulation 2 Polymer 4 none |
| 1 hour drying IPA 70% EtOH 70% IPA 50% EtOH 50% | 9 9 8.5 8.5 | 9 9 8.5 8 | 9 9 8.5 10 | 6 6 9 3 |
| 24 hours drying IPA 70% EtOH 70% EtOH 50% | 9 9.5 8 | 8.5 9.5 9 | 9 9.5 9.5 | 6 3 3 |
| 48 hrs drying IPA 70% EtOH 70% EtOH 50% | 9 9 9.5 | 9 9.5 9.5 | 9 9.5 9.5 | 5 3 4 |

| | FLOOR POLISH PERFORMANCE PROPERTIES - Alcohol Resistance | | | |
|---|---|---|---|---|
| | Example 17(Comparative) | Example 18 (Comparative) | Example 19 (Comparative) | Example 20 (Comparative) |
| Formulation Polymer Epoxy silane | Formulation 4 Polymer 5 1 wt% ES-1 | Formulation 4 Polymer 5 1 wt% ES-2 | Formulation 4 Polymer 5 1 wt% ES-3 | Formulation 4 Polymer 5 none |
| 1 hour drying IPA 70% EtOH 70% IPA 50% EtOH 50% | 3 5 4 6 | 3 5 4 6 | 3 3 5 6 | 3 6 6 5 |
| 24 hours drying IPA 70% EtOH 70% IPA 50% EtOH 50% | 3 3 3 3 | 3 3 3 3 | 3 3 3 3 | 3 3 3 3 |
| 48 hrs drying IPA 70% EtOH 70% IPA 50% EtOH 50% | 3 3 3 3 | 3 4 3 3 | 3 3 4 3 | 3 3 5 3 |
| Polymer 1 Swelling in Alcohol | | | | |

Example 21

| Polymer 1 | | | Initial weight(g) | %swelling | | | |
|---|---|---|---|---|---|---|---|
| | Epoxy silane | solvent used | | 1h | 3h | 6h | 24h |
| Formulation 1 | 1 wt% ES-2 | EtOH 70% | 0.194 | 19.5 | 34 | 32 | 24 |
| | | EtOH 50% | 0.122 | 28.5 | 34 | 28 | 19 |
| | | IPA 70% | 0.253 | 20 | 37.5 | 40 | 53 |
| | | IPA 50% | 0.16 | 28 | 47 | 44 | 42 |

Example 22

| | | | Initial weight(g) | %swelling | | | |
|---|---|---|---|---|---|---|---|
| | Epoxy silane | solvent used | | 1h | 3h | 6h | 24h |
| Formulation 1 | 1 wt% ES-3 | EtOH 70% | 0.066 | 19.5 | 29 | 21 | 15 |
| | | EtOH 50% | 0.047 | 21 | 23 | 15 | 11 |
| | | IPA 70% | 0.062 | 32 | 50 | 42 | 40 |
| | | IPA 50% | 0.065 | 26 | 37 | 31 | 25 |

Example 23

| | | | Initial weight (g) | %swelling | | | |
|---|---|---|---|---|---|---|---|
| | Epoxy silane | solvent used | | 1h | 3h | 6h | 24h |
| Formulation 1 | 1 wt% ES-1 | EtOH 70% | 0.0108 | 19 | 33 | 33 | 30 |
| | | EtOH 50% | 0.096 | 29 | 30 | 28 | 27 |
| | | IPA 70% | 0.101 | 25 | 57 | 52 | 56 |
| | | IPA 50% | 0.068 | 48 | 59 | 50 | 41 |

Example 24

(Comparative)

| | | | Initial weight(g) | %swelling | |
|---|---|---|---|---|---|
| | Epoxy silane | solvent used | | 1h | 3H |
| Formulation 1 | none | EtOH 70% | 0.118 | dissolved | dissolved |
| | | EtOH 50% | 0.116 | partially dissolved | dissolved |
| | | IPA 70% | 0.137 | dissolved | dissolved |
| | | IPA 50% | 0.12 | 6 | dissolved |

| | FLOOR POLISH PERFORMANCE PROPERTIES | | | |
|---|---|---|---|---|
| | Example 25 (Comparative) | Example 26 | Example 27 | Example 28 |
| Samples | Formulation 1 | Formulation 1 | Formulation 1 | Formulati on 1 |
| Polymer | Polymer 1 | Polymer 1 | Polymer 1 | Polymer 1 |

(continued)

| | FLOOR POLISH PERFORMANCE PROPERTIES | | | |
|---|---|---|---|---|
| | Example 25 (Comparative) | Example 26 | Example 27 | Example 28 |
| | | | | |
| Epoxy silane | none | 1 wt% ES-1 | 1 wt % ES-3 | 1 wt % ES-2 |
| Other information | | | | |
| | | | | |
| Gloss over vinyl tile | 39 | 40 | 38 | 39 |
| Recoat gloss over vinyl tile | 60 | 58 | 57 | 58 |
| Properties : | | | | |
| Leveling | 5 | 5 | 5 | 5 |
| Detergent resistance Ambient | 5 | 5 | 5 | 5 |
| Detergent resistance 45°C | 5 | 5 | 5 | 5 |
| Removability Ambient | V.G. | Exc | Exc | Exc |
| Removability 45°C | V.G. | Exc | V.G. | Fair |
| Black Heel Mark resistance | 7 | 6 | 6 | 8 |
| Scuff resistance | 7 | 7 | 7 | 7 |
| Slip resistance [1] | 4 | 4 | 4 | 4 |
| Storage stability (mPa·s (cPs), 60 rpm) : | | | | |
| initial : | 4.9 | 4.5 | 4.9 | 4.7 |
| 4 weeks after 50°C : | 5.2 | 5.3 | 5.4 | 5.5 |
| (1) Control was based on Formulation 3 (with no epoxy silane) | | | | |

**Claims**

1. An aqueous coating composition comprising: (a) an aromatic-acrylic polymer, which is a polymer of acrylic monomers and vinyl aromatic monomers or vinyl cyclohexyl monomers; (b) an epoxy silane; and (c) a nonionic surfactant comprising a $C_{10}$-$C_{20}$ alkyl group and two to four polymerized units of ethylene oxide; the composition contains less than 0.5% total of zinc, calcium and magnesium; and pH of the composition is from 6.5 to 8.0.

2. The composition of claim 1 in which the epoxy silane is an aliphatic compound having one epoxy group and one silane group; and in which the epoxy silane has from eight to sixteen carbon atoms.

3. The composition of claim 2 in which the nonionic surfactant comprises a $C_{12}$-$C_{16}$ alkyl group.

4. The composition of claim 3 in which the aromatic-acrylic polymer comprises from 0.4 to 1.8 wt% polymerized crosslinker units.

5. The composition of claim 4 in which the aromatic-acrylic polymer comprises from 28 to 45 wt% polymerized units of vinyl aromatic monomers and from 54 to 71 wt% polymerized residues of acrylic monomers and in which the aromatic acrylic polymer is not a multistage polymer.

6. A method for producing a coating composition by combining ingredients comprising: (a) an aromatic-acrylic polymer, which is a polymer of acrylic monomers and vinyl aromatic monomers or vinyl cyclohexyl monomers; (b) an epoxy silane; and (c) a nonionic surfactant comprising a $C_{10}$-$C_{20}$ alkyl group and two to four polymerized units of ethylene oxide; in an aqueous medium to form an aqueous composition; wherein the aqueous composition contains less than 0.5% total of zinc, calcium and magnesium and has a pH from 6.5 to 8.0.

**7.** The method of claim 6 in which the epoxy silane is an aliphatic compound having one epoxy group and one silane group; the epoxy silane has from eight to sixteen carbon atoms; and the nonionic surfactant comprises a $C_{12}$-$C_{16}$ alkyl group.

**8.** The method of claim 7 in which the aromatic-acrylic polymer comprises from 0.4 to 1.8 wt% polymerized crosslinker units.

**9.** The method of claim 8 in which the aromatic-acrylic polymer comprises from 28 to 45 wt% polymerized units of vinyl aromatic monomers and from 54 to 71 wt% polymerized residues of acrylic monomers.

**10.** The method of claim 9 in which the aromatic acrylic polymer is not a multistage polymer.

**Patentansprüche**

**1.** Eine wässrige Beschichtungszusammensetzung, die Folgendes beinhaltet: (a) ein aromatisches Acrylpolymer, das ein Polymer von Acrylmonomeren und vinylaromatischen Monomeren oder Vinylcyclohexylmonomeren ist; (b) ein Epoxysilan; und (c) ein nichtionisches Tensid, das eine $C_{110}$-$C_{20}$-Alkylgruppe und zwei bis vier polymerisierte Einheiten von Ethylenoxid beinhaltet; wobei die Zusammensetzung weniger als insgesamt 0,5 % Zink, Calcium und Magnesium enthält; und der pH-Wert der Zusammensetzung von 6,5 bis 8,0 beträgt.

**2.** Zusammensetzung gemäß Anspruch 1, wobei das Epoxysilan eine aliphatische Verbindung mit einer Epoxygruppe und einer Silangruppe ist; und bei der das Epoxysilan von acht bis sechzehn Kohlenstoffatome aufweist.

**3.** Zusammensetzung gemäß Anspruch 2, wobei das nichtionische Tensid eine $C_{12}$-$C_{16}$-Alkylgruppe beinhaltet.

**4.** Zusammensetzung gemäß Anspruch 3, wobei das aromatische Acrylpolymer zu 0,4 bis 1,8 Gew.-% polymerisierte Vernetzereinheiten beinhaltet.

**5.** Zusammensetzung gemäß Anspruch 4, wobei das aromatische Acrylpolymer zu 28 bis 45 Gew.-% polymerisierte Einheiten von vinylaromatischen Monomeren und zu 54 bis 71 Gew.-% polymerisierte Reste von Acrylmonomeren beinhaltet und wobei das aromatische Acrylpolymer kein mehrphasiges Polymer ist.

**6.** Ein Verfahren zur Herstellung einer Beschichtungszusammensetzung durch das Kombinieren von Zutaten, beinhaltend: (a) ein aromatisches Acrylpolymer, das ein Polymer von Acrylmonomeren und vinylaromatischen Monomeren oder Vinylcyclohexylmonomeren ist; (b) ein Epoxysilan; und (c) ein nichtionisches Tensid, das eine $C_{10}$-$C_{20}$-Alkylgruppe und zwei bis vier polymerisierte Einheiten von Ethylenoxid beinhaltet; in einem wässrigen Medium, um eine wässrige Zusammensetzung zu bilden; wobei die wässrige Zusammensetzung weniger als insgesamt 0,5 % Zink, Calcium und Magnesium enthält und einen pH-Wert von 6,5 bis 8,0 aufweist.

**7.** Verfahren gemäß Anspruch 6, wobei das Epoxysilan eine aliphatische Verbindung mit einer Epoxygruppe und einer Silangruppe ist; das Epoxysilan von acht bis sechzehn Kohlenstoffatome aufweist; und das nichtionische Tensid eine $C_{12}$-$C_{16}$-Alkylgruppe beinhaltet.

**8.** Verfahren gemäß Anspruch 7, wobei das aromatische Acrylpolymer zu 0,4 bis 1,8 Gew.-% polymerisierte Vernetzereinheiten beinhaltet.

**9.** Verfahren gemäß Anspruch 8, wobei das aromatische Acrylpolymer zu 28 bis 45 Gew.-% polymerisierte Einheiten von vinylaromatischen Monomeren und zu 54 bis 71 Gew.-% polymerisierte Reste von Acrylmonomeren beinhaltet.

**10.** Verfahren gemäß Anspruch 9, wobei das aromatische Acrylpolymer kein mehrphasiges Polymer ist.

**Revendications**

**1.** Une composition de revêtement aqueuse comprenant : (a) un polymère acrylique-aromatique, qui est un polymère de monomères acrylique et de monomères aromatiques vinyle ou de monomères vinyle cyclohexyle ; (b) un époxyde-silane ; et (c) un tensioactif non ionique comprenant un groupe alkyle en $C_{10}$-$C_{20}$ et de deux à quatre unités polymérisées d'oxyde d'éthylène ; la composition contient moins de 0,5 % au total de zinc, de calcium et de magnésium ; et le pH de la composition va de 6,5 à 8,0.

**2.** La composition de la revendication 1 dans laquelle l'époxyde-silane est un composé aliphatique ayant un groupe époxyde et un groupe silane ; et dans laquelle l'époxyde-silane possède de huit à seize atomes de carbone.

**3.** La composition de la revendication 2 dans laquelle le tensioactif non ionique comprend un groupe alkyle en $C_{12}$-$C_{16}$.

**4.** La composition de la revendication 3 dans laquelle le polymère acrylique-aromatique comprend de 0,4 à 1,8 % en poids d'unités d'agents de réticulation polymérisées.

**5.** La composition de la revendication 4 dans laquelle le polymère acrylique-aromatique comprend de 28 à 45 % en poids d'unités polymérisées de monomères aromatiques vinyle et de 54 à 71 % en poids de résidus polymérisés de monomères acrylique et dans laquelle le polymère acrylique-aromatique n'est pas un polymère à zones multiples.

**6.** Une méthode de production d'une composition de revêtement en combinant des ingrédients comprenant : (a) un polymère acrylique-aromatique, qui est un polymère de monomères acrylique et de monomères aromatiques vinyle ou de monomères vinyle cyclohexyle ; (b) un époxyde-silane ; et (c) un tensioactif non ionique comprenant un groupe alkyle en $C_{10}$-$C_{20}$ et de deux à quatre unités polymérisées d'oxyde d'éthylène ; dans un milieu aqueux pour former une composition aqueuse ; la composition aqueuse contenant moins de 0,5 % au total de zinc, de calcium et de magnésium et présentant un pH allant de 6,5 à 8,0.

**7.** La méthode de la revendication 6 dans laquelle l'époxyde-silane est un composé aliphatique ayant un groupe époxyde et un groupe silane ; l'époxyde-silane possède de huit à seize atomes de carbone ; et le tensioactif non ionique comprend un groupe alkyle en $C_{12}$-$C_{16}$.

**8.** La méthode de la revendication 7 dans laquelle le polymère acrylique-aromatique comprend de 0,4 à 1,8 % en poids d'unités d'agents de réticulation polymérisées.

**9.** La méthode de la revendication 8 dans laquelle le polymère acrylique-aromatique comprend de 28 à 45 % en poids d'unités polymérisées de monomères aromatiques vinyle et de 54 à 71 % en poids de résidus polymérisés de monomères acrylique.

**10.** La méthode de la revendication 9 dans laquelle le polymère acrylique-aromatique n'est pas un polymère à zones multiples.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7812090 B
- US 5574090 A
- US 4517330 A
- US 55740090 B